# DEMANDE DE BREVET EUROPEEN

(11) **EP 0 184 477 A1**
(43) Date de publication de la demande: **11.06.1986**
(21) Numéro de dépôt: 85402127.6
(22) Date de dépôt: 05.11.1985
(51) Int. Cl.: C04B 28/18

(54) **Procédé de fabrication de produits minéraux à base d'argile, présentant une grande stabilité dimensionnelle, et produits en résultant**

(30) Priorité: 05.11.1984 FR 8416818
(71) Demandeur: Lavau, Jacques, F-02100 Saint-Quentin (FR); de Gail, Henri, F-75016 Paris (FR)
(72) Inventeur: Lavau, Jacques, F-02100 Saint-Quentin (FR); de Gail, Henri, F-75016 Paris (FR)
(74) Mandataire: Behaghel, Pierre (FR)

(57) **Abrégé**

L'invention consiste à mélanger de l'argile, du sable, un réactif calcique, un hydroxyde alcalin et de l'eau, à mettre en forme ce mélange, par example par extrusion, à sécher et maturer jusqu'à la limite de retrait, et enfin à cuire en deux étapes à la pression atmosphérique, la première en atmosphère humide à une température comprise entre 95 et 105°C, et la seconde à une température de l'ordre de 120° C en atmosphère séchante. Les éléments de construction obtenus (briques, tuiles, granulés...) ont une résistance mécanique élevée, une grande résistance au gel et une fabile dilatation à l'immersion.

## Description

Dès que le ciment a cessé d'être un produit rare et cher, c'est à dire depuis au moins 1922 (brevet Harrison Rich, US 1,404,060), on a pensé à stabiliser des sols argileux avec du ciment, et à fabriquer ainsi des briques et parpaings, ou autres éléments utilisables dans la construction, en évitant la cuisson céramique. Les succès ont été très variables. Par exemple, à Madagascar, les administrateurs coloniaux étaient satisfaits du pisé de latérite stabilisé au ciment, tandis que sous d'autres climats, même nettement moins pluvieux tels que celui de la Mauritanie, les bâtiments édifiés en blocs de sol-ciment compressé sont très dégradés en peu d'années.

Les inventeurs précédents s'étaient insuffisamment intéressés aux variations dimensionnelles du produit fabriqué, lors des successions humidité-sécheresse auxquelles sont soumis les matériaux de gros oeuvre, et même les cloisons intérieures, au moins au moment de leur pose et de leur enduisage par un plâtre. Les argiles les plus difficiles à stabiliser sont justement celles qui sont les plus fréquentes sous tous les climats non équatoriaux ni tropicaux humides, à savoir des argiles à briques à dominante d'illites, de chlorites, de smectites et/ou de vermiculites: Il n'a pas été rare de constater des variations dimensionnelles dépassant 4 pour mille, et parfois beaucoup plus, pour des mélanges contenant un tiers de ciment portland, et deux tiers d'argile à brique, parfaitement conformes au brevet français n° 2 307 774, lors de tests consistant en une immersion de 48 heures, suivie d'un séchage de 7 jours à 70°C. De telles variations dimensionnelles sont très au dessus de ce qui est admissible dans un bâtiment, et occasionnent des désordres bien visibles dans les murs d'essai en vraie grandeur. Une amélioration immédiate pour un céramiste consiste à diluer l'argile avec des matières inertes, c'est à dire dépourvues de propriétés colloïdales de gonflement et de plasticité à l'eau, telles qu'un sable assez fin (ce qu'un céramiste appelle un "dégraissant"). On ne fait alors pas moins de 1,3 pour mille de gonflement à l'immersion. Par la présente invention, on reste couramment en dessous de 0,6 pour mille. de variations dimensionnelles.

La première preuve de recherche des bases scientifiques d'un tel procédé se trouve dans le brevet britannique GB 40.886/1966 déposé par Joseph Martin Wilson. Celui-ci a mis en avant que le seul constituant à prendre en considération dans le ciment ou dans la chaux était la chaux libre Ca(OH)₂. Il recommande ensuite de former des aluminates, alumino-silicates et silicates de calcium tous suffisamment stables pour ne pas être décomposés par le dioxyde de carbone de l'air, qui est un acide plus fort, dans les conditions ambiantes, que l'acide silicique ou l'alumine. Selon Wilson, ce résultat est obtenu si après réaction la plus complète possible de la chaux avec les minéraux argileux et autres alumino-silicates réactifs, d'une part il subsiste de la chaux libre susceptible de se carbonater sacrificiellement à la place des alumino-silicates de calcium, d'autre part, le pH d'hydrolyse du matériau formé reste supérieur à 11, et de préférence supérieur à 11,2. Pour obtenir cette complétude de la réaction, Wilson est moins précis, puisqu'il parle de cuisson à la vapeur d'eau entre 80 et 100°C (valeurs qu'il recommande pour faire le test du dosage, afin d'appliquer ensuite le critère du pH), aussi bien que de cuisson à 180°C et que de simple abandon à la température ambiante, de préférence sous feuilles de matière plastique, et de préférence en climat chaud. Wilson indique comme matières premières de préférence des bauxites ou des latérites, mais mentionne du poussier et du flint du Danemark. La teneur en chaux monte dans ce dernier cas à 332.

Profitant de la composition particulière des sols tropicaux ferrallitiques et des latérites en résultant (kaolinite, oxyde ferrique et éventuellement gibbsite, plus quartz), le brevet français n° 2.199.751 présente un procédé utilisant la chaux aérienne éteinte en proportion de 2 à 33% de la masse de sol, et en cuisant en vapeur d'eau entre 60 et 100°C, de préférence à 97°C. La validité de ce procédé est limitée aux seuls matériaux latéritiques, et s'accommode mal de procédés de mise en forme expéditifs et de haute productivité tels que l'extrusion, au contraire, il préconise le pressage à haute pression, en poudre semi-sèche.

Pour un sous-ensemble restreint de ces sols ferrallitiques, le brevet français n° 2.490.626 utilise la soude caustique, pour former des minéraux du genre hydroxysodalite, et exclut ainsi tout sol contenant de la gibbsite, et tout sol contenant des argiles 2/1, sauf à corriger le rapport molaire Si/Al pour le ramener à l'unité, ce qui peut souvent mener à un prix de revient prohibitif. Accessoirement, ce brevet préconise d'obtenir la soude par caustification in situ du carbonate de sodium par de la chaux.

Alors que l'état antérieur de l'art réussit presque exclusivement avec des argiles kaoliniques, la présente invention concerne principalement les cas difficiles, le traitement et le durcissement chimique de ces argiles à briques courantes en climats froids, tempérés ou sub-tropicaux, ainsi que des argiles d'origine marine, contenant des proportions notables d'illites, vermiculites, chlorites et smectites, mais ne leur est pas limitée.

.La présente invention a cinq caractéristiques principales:
- on renormalise en granulométrie et en surface spécifique la masse argilo-sableuse, puis on mélange intimement cette masse argilosableuse avec un réactif principal et un réactif auxiliaire.
- Le principe du réactif principal est un hydroxyde alcalino-terreux, tel que les hydroxydes de calcium, de strontium, ou de baryum. Cet hydroxyde est proportionné selon la surface spécifique de l'argile incorporée dans le mélange. Ce réactif principal peut être obtenu dans la masse même du mélange, par une réaction qui dégage de tels hydroxydes alcalino-terreux, -par exemple l'hydratation de klinker, ou de chaux vive, ou de certaines fumées et scories métallurgiques.
- le réactif auxiliaire est un hydroxyde de métal alcalin, un hydroxyde de lithium, de sodium, de potassium, de césium, et/ou de rubidium, ou un sel d'un tel métal, qui soit caustifiable par réaction avec les hydroxydes du réactif principal, ou un mélange des précédents. Ce réactif auxiliaire peut être éventuellement omis. Il peut y avoir une période de maturation entre le mélange et la mise en forme.
- Après formage, et éventuellement après séchage partiel et maturation à température modérée, le produit est mis à durcir en atmosphère saturée d'eau, et à température égale à la température d'ébullition de la solution concentrée d'hydroxyde alcalin intersticielle aux pores du produit, typiquement 95 à 105 °C, jusqu'à ce que la quantité d'hydroxyde alcalino-terreux non encore réagi soit négligeable..
- Puis la température est portée aux environs de 120 °C à 130°C, éventuellement plus, durant une durée de 3 à 12 heures, suffisante pour rendre négligeable la solubilité des composés alcalins et autres silicates de bas poids moléculaire.

Ici et dans la suite du texte, "alcalin" désigne les composés des métaux alcalins (lithium, sodium, potassium, rubidium et césium) et leurs solutions, et ne préjuge pas du pH de leurs solutions.

Selon la première caractéristique de l'invention, on commence par renormaliser en granulométrie et en surface spécifique la masse argileuse.

La surface spécifique est évaluée par adsorbtion de bleu de méthylène, selon la norme NFP 18 592. L'essai normalisé donne une "valeur de bleu" en millilitres de solution à 10 g de bleu tri-hydraté par litre d'eau déminéralisée, par 100 g de sol. On multiplie cette "valeur de bleu" par 21 pour obtenir la surface spécifique électronégative totale (interne + externe) du sol ou de l'argile en mètre carré par gramme. Malgré sa précision et sa reproductibilité réduites, de l'ordre de 10%, cet essai donne la mesure physico-chimique qui nous intéresse. Il peut éventuellement être remplacé par une autre mesure basée sur le même principe de la chimisorption d'un cation, mais pas du tout par la méthode classique B.E.T., qui mesure la seule surface externe par adsorption physique de molécules de gaz non polaire tel que l'azote, sur des argiles déshydratées nécessairement sous vide, et dont l'espace interfoliaire, éventuellement gonflant dans le cas des smectites telles que des montmorillonites, saponites ou hectorites, a collapsé et a cessé d'être accessible à l'adsorption, ce qui fait de la mesure B.E.T. une mesure invalide pour nos besoins.

En chimisorption de bleu de méthylène, une kaolinite sera mesurée entre 40 et 50 m²/g, une illite vers 100, une vermiculite vers 200, et une montmorillonite ou une hectorite vers 600 à 800 m²/g, ce qui est, dans la pratique de l'invention, bien représentatif de leur réactivité chimique et de leur capacité d'absorption d'hydroxyde de calcium.

La première tâche du praticien qui a la charge de composer une masse argileuse bonne à former, par extrusion, ou par pressage, laminage, électrophorèse ou tout autre moyen, est de limiter la surface spécifique de son mélange à un maximum de-60 m²/g_{@} et de préférence 10 à 30 m²/g. Ces limites ne sont pas définies par des raisons purement techniques, mais technico-économiques, puisque nous verrons plus loin que cette surface spécifique donne une première approximation de la fraction active de l'argile pour une durée et une température économiquement acceptables, et une consommation en réactif calcique et/ou alcalin acceptable. Il est évident que ces limites qui ont été définies pour des produits courants du bâtiment, en pays développés, devraient être revues à la baisse en pays moins développé, et dans la mesure où la matière première disponible s'y prête, ce qui est souvent le cas des latérites et sols ferrallitiques disponibles dans les pays tropicaux. Inversement, ces limites peuvent être revues légèrement en hausse pour des produits à grande valeur ajoutée, tels que des grands panneaux préfabriqués, ou des éléments de toiture. Par exemple, en présence d'une glauconie magnésienne développant 150 m²/g, on voit tout de suite qu'on n'a droit à en incorporer que 20 à 30% dans le mélange, le complément de charges devant avoir une surface spécifique négligeable, tel qu'un filler calcaire, ou un sable assez fin bien gradué; ensuite, le praticien cherchera, pour compléter son mélange de glauconie et de sable, un filler schisteux délité, développant 5 à 6 m²/g, capable en mélange avec la glauconie, de participer à sa plasticité, et d'éviter de composer une masse inextrudable, ainsi qu'on y aurait abouti, si l'on n'avait fait appel qu'à du sable ou à un filleᵣ calcaire pour renormaliser la surface spécifique de la glauconie à une valeur acceptable. On retiendra un mélange de 18 à 232 de glauconie, 50 à 602 de schiste délité, 20 à 302 de sable. Cette composition totalise alors 29 à 37 m²/g, ce qui reste dans les limites de l'économiquement acceptable pour le bâtiment.

Inversement, il arrive, par exemple en présence de sols tropicaux ferrallitiques contenant surtout de la kaolinite blindée d'oxyde de fer, de la gibbsite et de l'hématite ou de la goethite, et développant de 4 à 10 m²/g au bleu, que le praticien soit acculé à l'alternative suivante: renoncer à la mise en forme par extrusion, et se tourner vers le pressage à pression élevée, afin de profiter au maximum de la faible gourmandise de cette matière première en réactifs, ou lui ajouter une argile plus plastique, mais de plus grande surface spécifique, et donc plus gourmande en réactif, pour faire la mise en forme par des moyens plus expéditifs et moins puissants tels que le pressage en pâte semi-ferme, ou l'extrusion. Ces choix sont familiers à l'homme de l'art et n'ont pas à être plus détaillés ici.

Ensuite, le praticien doit vérifier que la courbe granulométrique du mélange qu'il vient de composer, ne comporte pas d'accidents brusques, dus à une proportion excessive d'un composant granulométrique trop bien classé, ni de "trous granulométriques", qui soient importants, par exemple dus à une carence d'éléments limoneux de 2 à 20 micromètres, et de sables fins de 20 à 200 micromètres, tandis que les sables grossiers et l'argile proprement dite seraient sur-représentés. Dans le cas de la dernière carence citée, la surface spécifique globale pourrait bien être correcte, mais ni la compacité ni la plasticité, ni la résistance mécanique après séchage ne seraient optimisées, par manque d'éléments de taille intermédiaire. Le matériau serait notamment fragilisé au séchage après extrusion, par les nombreuses micro- fissures autour de chaque grain de sable grossier, pour accommoder le retrait de la pâte d'argile fine, fissures qui auraient été évitées par une dispersion convenable d'éléments inertes fins dans la matrice argileuse.

On peut donner les règles granulométriques suivantes:
- courbe granulométrique aussi proche que possible d'une droite, ou de préférence d'une courbe de Furnas définie plus loin, entre les diamètres équivalents de 1 à 200 micromètres. Ceci doit être vérifié (et obtenu) après adjonction du liant calcique défini plus loin.
   La courbe de Furnas de référence s'écrit: 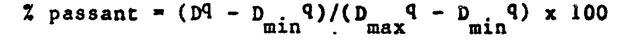 avec Dₘₐₓ = 6,3 mm,
   Dₘᵢₙ ' 400 Angströms,
   q = 0,15

   ce qui donne les points suivants: 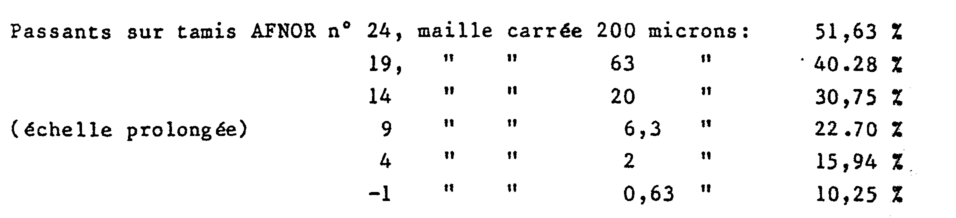
- Pas de grains plus gros qu'un tiers, et si possible un septième de la plus petite épaisseur de paroi du produit final. Soit un à deux millimètres pour des briques creuses, avec 8 millimètres d'épaisseur de paroi.
- Définissant le D80 comme le diamètre équivalent du trou de tamis réel ou virtuel qui laisse passer 80% de la masse du mélange, et le D20 comme le diamètre du tamis virtuel qui laisse passer 20% de la masse, un rapport D80/D20 au moins égal à 5, et de préférence 15 à 150.

On trouve pages 168, 172 et 174 de l'ouvrage "Construire en terre", de l'équipe CRATerre et édité par Alternatives et Parallèles, Paris 1979, des directives granulométriques très voisines de celles préconisées selon l'invention, bien que plus tolérantes en gros grains (il s'agit de pisé et non d'extrusion de parois fines), et moins précises sur les petits diamètres équivalents.

Le technicien céramiste est habitué à respecter de telles directives granulométriques par mélange, et éventuellement broyage des ressources minérales à sa disposition, et il n'est pas nécessaire de développer ici cette pratique courante.

La pratique des mortiers et bétons définit le caractère "inerte" des charges: insolubles dans les eaux qui percolent dans le produit durci, ne gonflant pas dans une réaction alcali-granulats, et ne consommant pas de chaux par une réaction pouzzolanique, et bien sûr ne gonflant pas à l'humidité comme le font les argiles: ainsi des rhyolites, des opales et pierres-ponces très peu alumineuses seront rejetées, tandis que des calcaires non-dolomitiques, de la poudre 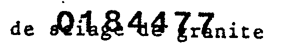 c₂ du sable quartzeux seront admis comme inertes. Souvent des minéraux quasi-inertes pourront être admis dans la composition: des minéraux pouzzolaniques, mais de réaction plus lente que l'argile, ainsi des cendres volantes, des laitiers granulés, de la poudre de sciage de basalte. Dans les petites tailles, inférieures à 5 microns, on ne peut non plus considérer la dolomite présente dans certaines argiles, comme un granulat inerte, puisqu'il se dé-dolomitise en pH supérieur à 9. surtout en présence de cations alcalins, et consomme de l'hydroxyde de calcium selon la réaction: 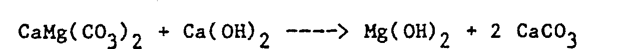 et il convient là aussi d'en tenir compte pour déterminer la teneur en hydroxyde de calcium nécessaire, calcul qui va être détaillé maintenant.

La seconde caractéristique de l'invention est de proportionner et de qualifier le réactif principal alcalino-terreux (c'est à dire dans presque tous les cas calcique), ou sa partie calcique, à partir de deux paramètres:
- La surface spécifique précédemment définie et mesurée.
- Le volume des vides après séchage.

La fraction active de la masse argileuse est le produit de la surface totale par une profondeur moyenne d'attaque, et par la masse volumique du minéral argileux. Dans le cas d'une montmorillonite pure; on sait que la fraction active est égale à la totalité de la montmorillonite, donc la profondeur d'attaque est de 5 A (0,5 nanomètres). Dans les cas rencontrés en pratique, on tablera pour commencer les essais sur une profondeur d'attaque de 10 A (1 nm). Cette profondeur est une fiction géométrique simplificatrice bien utile, car les micrographies montrent que l'attaque des argiles est beaucoup plus rapide sur les bords et le long des défauts linéaires des minéraux, que sur leurs faces.

Le réactif principal sera la chaux éteinte, ou de la chaux vive finement broyée, de la chaux hydraulique, ou un klinker portland broyé, ou un mélange de tels constituants. Chacun de ces constituants est considéré comme un apporteur d'hydroxyde de calcium, ou plus généralement d'hydroxyde de métal alcalino-terreux. La suite est écrite en ne considérant que le seul hydroxyde de calcium, et les variantes s'en déduisent aisément, en substituant une mole d'hydroxyde de strontium ou de baryum, pour une mole d'hydroxyde de calcium. Ainsi un klinker portland sera considéré comme un offreur en hydroxyde de calcium au cours de son hydratation en fonction de sa composition réelle, par exemple:

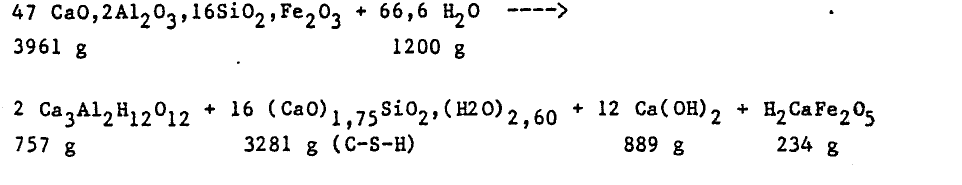

Le ciment portland sera donc considéré comme un très bon apporteur de gels C-S-H, si rapide même qu'il rend l'extrusion acrobatique sans retardants énergiques, mais comme un médiocre offreur en chaux, puisqu'il faut, selon l'équation précédente 3961 g de klinker pour offrir 889 g d'hydroxyde de calcium. Toute chaux sera évaluée de la même façon: après analyse chimique, on écrira de la même façon son rendement en hydroxyde de calcium (consommable par la fraction active du matériau argileux) et en autres minéraux néoformés. Une méthode plus expéditive pour évaluer une chaux est de la doser par un acide fort tel que HC1, en neutralisant jusque pH 11: la fraction neutralisée entre les pH 12,6 et 11, est considérée comme la fraction active, ou "hydroxyde de calcium", et tout le reste comme fraction stérile.

Selon le premier critère, on proportionne l'hydroxyde de calcium à la surface spécifique, selon la proportion:
au minimum, 1 mg d'hydroxyde de calcium, et plus générâlement 27 microéquivalents d'hydroxyde alcalino-terreux par m²,
et de préférence: 3 à 5 mg d'hydroxyde ·de calcium, plus généralement 81 à 135 microéquivalents d'hydroxyde alcalino-terreux par m² d'argile, mesuré au bleu.

Il appartient à l'utilisateur de la présente invention, de déterminer par des essais empiriques, quelle est exactement la "profondeur d'attaque" fictive, et par conséquent la proportion de liant calcique dans la "fourchette" de valeurs donnée ici et par conséquent aussi la durée exacte du traitement thermique défini plus loin, qu'il lui faut adopter pour satisfaire les besoins techniques de son marché.

En pratique, le second critère n'intervient que quand la formule précédente aboutit à recommander moins de 5Z de chaux, par rapport à la masse de l'argile et de la charge, pour des matériaux à très faible surface spécifique, se rapprochant d'un mortier fin classique. Si la résistance mécanique, notamment au gel, est insuffisante, on suspectera alors un rapport insuffisant entre le volume total de minéraux néoformés, aluminates, gel C-S-H, et zéolites éventuelles, et le volume de vides après séchage. Alors que le premier critère conduisait invariablement à préférer la chaux au ciment, ce second critère con

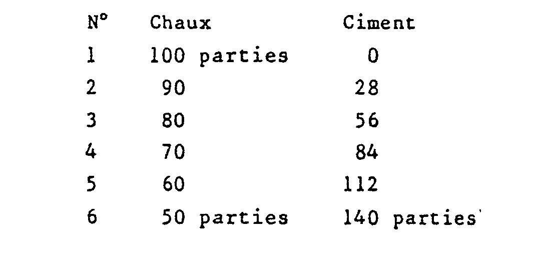 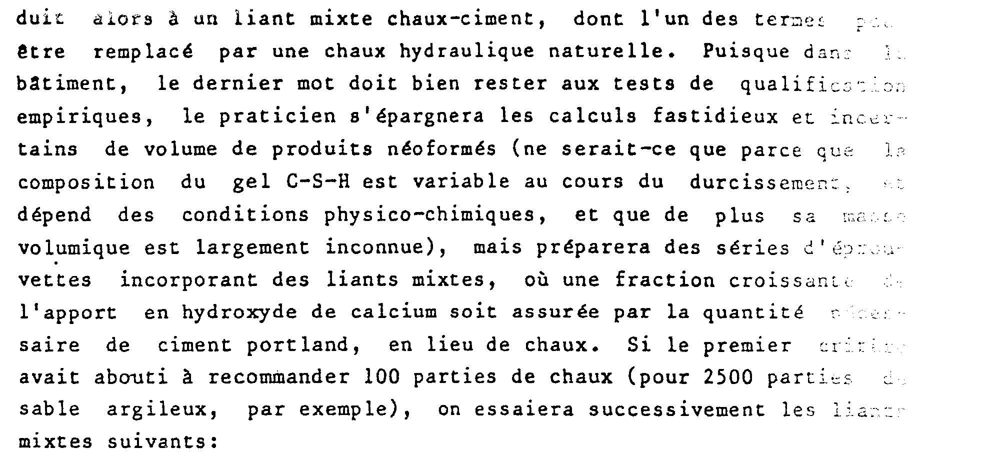 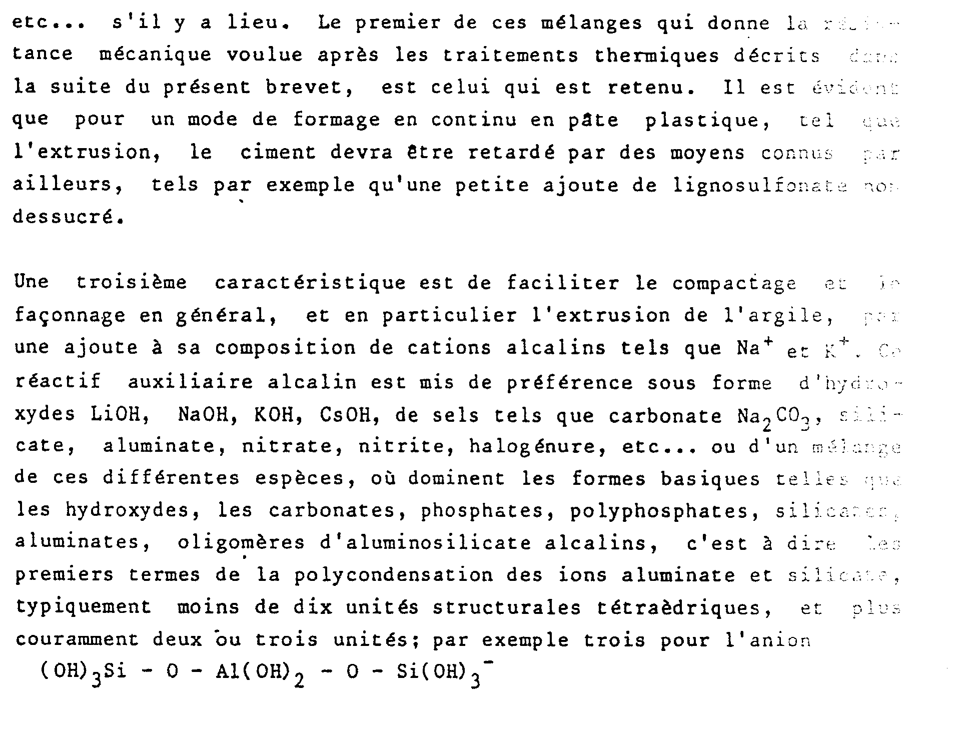

Le total des anions d'acide fort, tels que chlorure, sulfate et nitrate, ainsi que d' acides organiques tels qu'acide oléique, acide palmitique, lignosulfonate, amino-acides (protéines du sang, par exemple), doit être limité à moins d'un dixième et de préférence moins d'un vingtième d'équivalent par litre d'eau restant dans le produit à la fin du séchage, et surtout à moins du dixième du total des anions OH⁻ et des anions d'acide très faibles dans la solution, tels que les anions siliciques, aluminates et alumino-silicates. Ce dernier total équivalent des anions d'acides très faibles et anions.oxhydriles est peu différent du total des cations alcalins.

Ces ajouts alcalins solubles ont l'effet secondaire d'augmenter et de fixer la force ionique de la solution, d'augmenter considérablement la solubilité de la silice et de l'alumine, ainsi que de fixer le pH à une valeur plus élevée, du moins avant dissolution d'une fraction notable de l'argile et saturation de la solution en ions silicates et aluminates. Ce réactif auxiliaire peut être dosé jusqu'à trois équivalents de cations alcalins par litre d'eau laissé dans le produit à la fin du séchage, bien que le plus souvent, le meilleur -compromis efficacité/coût soit obtenu avec un équivalent par litre, soit de 0,2% à 1,8 Z pondéraux de NaOH sur sec. Avec toutes les réserves qui s'imposent sur les calculs de solubilité dans des solutions concentrées à chaud, la silice est approximativement trente fois plus soluble dans la solution intersticielle recommandée ici, que dans une solution calcique, dépourvue d'alcalins.

L'ordre d'introduction des composants a une importance certaine sur la plasticité, bien que difficile à prévoir et à transposer d'une argile à l'autre. La règle la plus couramment constatée par les demandeurs pour des argiles à dominante illitique (avec éventuellement des pourcentages minoritaires de chlorite, de kaolinite, ou de smectite) est que la soude, le carbonate, et/ou le silicate, c'est à dire le réactif auxiliaire, avaient un effet d'autant plus favorable sur la plasticité et la réduction d'eau de façonnage, qu'ils étaient introduits au malaxeur au dernier moment avant formage, tandis que le mélange principal de chaux, de sable et d'argile était avantageusement laissé maturer plusieurs heures dans un silo intermédiaire après un premier malaxage.

La réduction d'eau de façonnage permise par l'ajoute du réactif auxi liaire alcalin permet d'obtenir un produit plus compact, capable de résistances plus élevées, notamment au gel, ou d'obtenir la même résistance en consommant moins de réactif calcique. Cette moindre consommation a deux origines: l'une est le moindre volume de vides, et le plus grand nombre de contacts entre grains après séchage, qui nécessite d'autant moins de volume de minéraux de colmatage néoformés. L'autre est le déplacement des solubilités respectives de la silice et de l'alumine d'une part, de la chaux d'autre part, qui favorise la précipitation de phases moins riches en calcium, telles que la gehlé- nite hydratée au lieu de l'aluminate tétracalcique, ainsi qu'un gel C-S-H plus siliceux et moins calcique, c'est à dire aide à obtenir un bon volume de minéraux de colmatage avec moins de chaux. En pratique, on constate qu'un gramme d'hydroxyde de sodium se substitue aussi bien techniquement qu'économiquement à 4 grammes d'hydroxyde de calcium, aussi longtemps que l'hydroxyde de sodium dans la solution reste moins abondant en poids que le tiers de l'hydroxyde de calcium dans le mélange.

Il est évident que cette ajoute alcaline, mettant une grande quantité de cations monovalents solvatables dans la solution, en plus des cations de compensation échangeables, K + et Na⁺,libérés par les minéraux argileux, impose des cures hydrothermales soigneusement conduites et contrôlées, afin d'engager irréversiblement ces cations alcalins dans des phases zéolitiques stables, comparables à l'analcime et à d'autres zéolites (bien que différant des minéraux naturels par la très petite taille des domaines cristallins), et de ne pas laisser de sels solubles dans la masse du produit, ni dans sa peau.

Après formage, et si ce formage a nécessité une teneur en eau supé-- rieure à la limite de retrait, ou du coude de la "courbe de Bigot" (ces deux expressions étant équivalentes pour les cas qui nous occupent), les produits sont séchés jusqu'à la limite de retrait, par des moyens courants en céramique. Ce séchage, qui est nécessaire après extrusion, et qui est en général inutile après pressage en haute pression, laisse couramment 8 à 10X d'eau dans le produit.

La quatrième caractéristique du procédé selon l'invention est alors de soumettre le produit à un traitement thermique sensiblement à la température d'ébullition de l'eau, ou de la solution intersticielle alcaline, et en atmosphère saturée, ou très proche de la saturation par rapport à cette solution intersticielle. Durant la majeure partie de cette cure thermique, le départ d'eau doit être nul ou limité, afin de conserver un milieux aqueux dans lequel la dissolution des minéraux argileux et de la chaux d'une part, la diffusion des espèces ioniques ou complexes d'autre part, soient les plus rapides et complètes possible. Durant la dernière partie de cette étape du traitement thermique, la température sera progressivement élevée de 100 ou 100,5°C, à 102, 103 ou 104°C pour 1,013 bars. Il est du reste plus pratique et plus précis de réguler l'apport en énergie thermique sur le débit de vapeur d'eau s'échappant de la chambre de traitement thermique, plutôt que sur un thermostat, qui devrait de surcroît être programmé pour cette montée progressive en température au dessus de 100°C, graduellement accélérée. Durant la première partie de ce traitement thermique, c'étaient essentiellement les minéraux calciques qui précipitaient à partir de la solution, tout en consommant la réserve d'hydroxyde de calcium. La montée en température au dessus de 100,5°C ne doit commen cer que quand la réserve en chaux est sensiblement épuisée (ce qui n'est pas accessible à la mesure directe, mais est déterminé par la spectrométrie infrarouge sur les produits terminés: la présence d'une bande d'absorption à 3640cm⁻¹ trahit la présence d'hydroxyde de calcium sous l'une quelconque de ses variétés cristallines ou quasi-cristallines). C'est surtout dans la seconde période, quand la solution alcaline est progressivement concentrée par évaporation d'eau, qu'interviennent la germination et la croissance des minéraux zéolitiques.

Cette façon de rester exactement à la température d'ébullition de la solution intersticielle est la plus efficace qui puisse se faire en restant à la pression atmosphérique. Il est évident à l'homme de.l'art qu'un autoclavage permettrait de faire en une durée moindre, des produits au moins aussi performants, au prix d'investissements nettement plus lourds.

Selon la cinquième caractéristique de l'invention, le traitement thermique est terminé à une température d'environ 120°C, dans une atmosphère progressivement séchante. c'est à dire que dans un premier temps, la température est élevée à 120°C, sans pour autant admettre d'air neuf dans la chambre, qui continue donc de laisser échapper de la vapeur, saturante par rapport à la solution intersticielle dans le produit, mais sèche par rapport à de l'eau pure. Puis de l'air sec est admis à cette température, ce qui descend la pression partielle de vapeur d'eau entre 0,40 et 0,67 bars. Après cette phase, les produits sont refroidis et emballés pour l'expédition.

Pour obtenir de bons résultats, il faut en général:
a) Selon les argiles, une durée d'attente qui peut ou non être nécessaire après extrusion, et avant séchage, et durer éventuellement jusqu'à 24 heures,
b) 2 à 4 heures de séchage à une température modérée, typiquement 40 à 65°C, parfois plus pour des argiles très sensibles,
c) 4 à 24 heures de séjour à environ 100°C en atmosphère saturée et confinée, dont environ un tiers de cette durée consacrée à la montée finale en température,
d) 2 à 12 heures à 120°C, partagés pour moitié entre l'atmosphère confinée, et l'atmosphère séchante.

Dans la majorité des cas, la totalité de ces phases tient dans 18 à 36 heures.

Les demandeurs ont eu la surprise de constater que pour certaines argiles, élever la température finale de la cure jusqu'à respectivement 140 et 160°C, n'apportait aucune amélioration décisive des performances, comparée à celle obtenue par le passage à 120°C. D'autre part, il est connu que la concentration d'une solution de soude NaOH en équilibre avec la pression atmosphérique à 120°C est de 50 g de soude pour 100 g d'eau, et que ce chiffre donne au moins une idée approximative de la concentration de la solution intersticielle fort complexe de silicates et aluminates (éventuellement carbonates) principalement sodiques et potassiques. Cela signifie que ce séchage n'est jamais complet, et que son utilité est d'orienter les recristallisations et polycondensations de polymères minéraux peu cristallins vers .des formes plus stables supposées être comparables à l'analcime (ou un précurseur quasi-cristallin). La présence d'une phase aqueuse liquide est vraisemblablement utile à cette phase.

On peut mener cette phase de zéolitisation finale (et une partie de la phase précédente) à une température supérieure à 120°C, pourvu que ce soit dans une chambre ou un autoclave qui maintienne une relation entre la température et la pression de vapeur (Pw) en équilibre avec la même concentration de la solution intersticielle, soit pour:

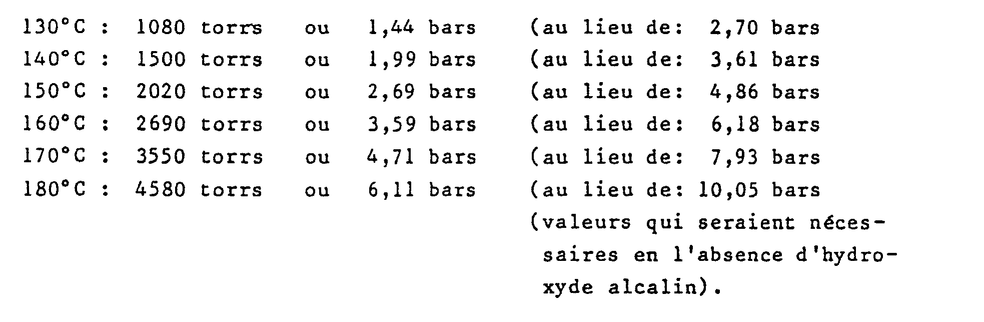

Cette relation recommandée pouvant s'exprimer sous la forme: 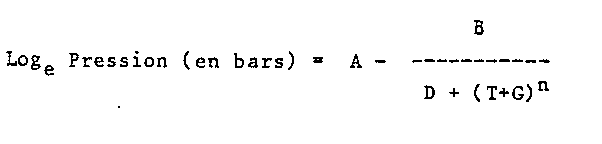
Avec A= -39,9987650913
B= -0,00652816195282
D= 0,000116962454664
G= 273,15
n= -1,78774855711
T: température en degrés Celsius

Le domaine préféré selon l'invention, pour la même plage de températures, s'étend selon les pressions partielles de vapeur d'eau suivantes (la pression totale de gaz étant d'abord aussi proche que possible de cette pression partielle, pour s'en écarter vers la fin):

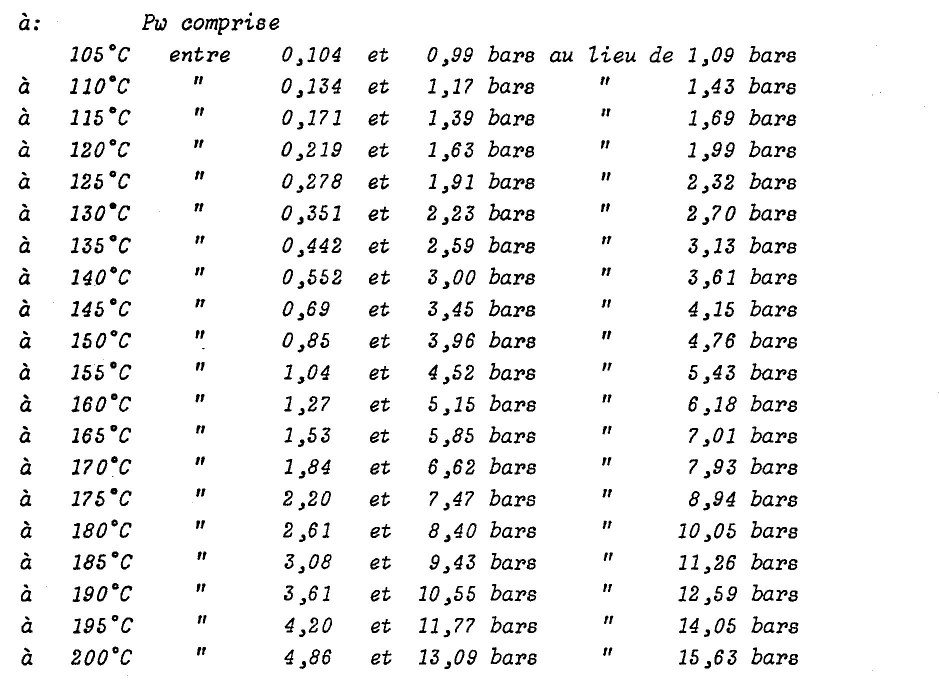

où la dernière colonne de ce tableau représente la pression qui serait nécessaire pour autoclaver à cette température une composition d'argile, sable et chaux, sans hydroxydes alcalins.

Les valeurs extrêmes de cette fourchette de pressions peuvent être obtenues par une formule d'interpolation de même allure que plus haut, avec les coefficients suivants:

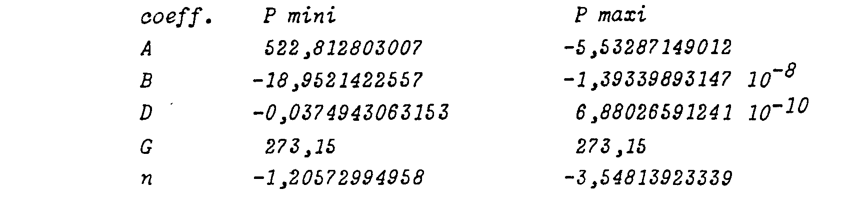

La durée de cette partie du traitement thermique peut ainsi être considérablement réduite. Les pressions sont sensiblement inférieures à celles qui auraient été nécessaires sans la présence de l'hgdroxyde alcalin. C'est un avantage notable du réactif auxiliaire selon l'invention.

Les exemples suivants montreront mieux l'application de l'invention, en décomposant ses différentes caractéristiques, (chaque traitement thermique étant conduit à la pression atmosphérique).

EXEMPLE 1: compare les effets du dosage en soude et du dosage en eau sur la pression d'extrusion, sur la compacité et sur la résistance finale. Les dosages sont indiqués en parties pondérales.
Composition de base: Argile 28,7 (kaolino-illitique, avec pyrites)
   silt 28,6
   sable 33,7
   chaux 9,0
Variante 1: carbonate de soude 1,3
Variante 2: " " 2,6
avec Wp = eau de façonnage, en % sur sec.
   Pex= pression d'extrusion en bars.
   Rf = résistance en flexion en bars.
   Rc = résistance en compression sur prisme, en bars.
   Cw = reprise d'eau, en % pondéraux.

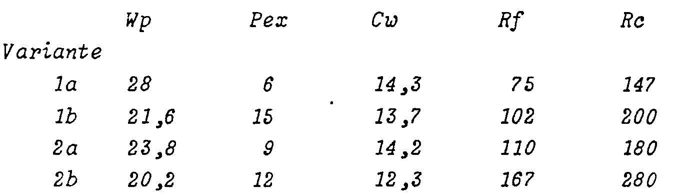

Exemple 2: montre d'une part l'influence du dosage en chaux sur une argile dolomitique très fine, d'autre part l'influence de la granulo-- métrie. Une charge grossière est d'autant mieux acceptée sans micro-fissurations par une matrice argileuse prenant beaucoup de retrait, qu'elle est "relayée" par une charge fine, ici les cendres volantes.

Avec: Cx : chaux,
Na : carbonate de soude
Ce : cendres volantes.
Sa : sables
Ar : argile dolomitique

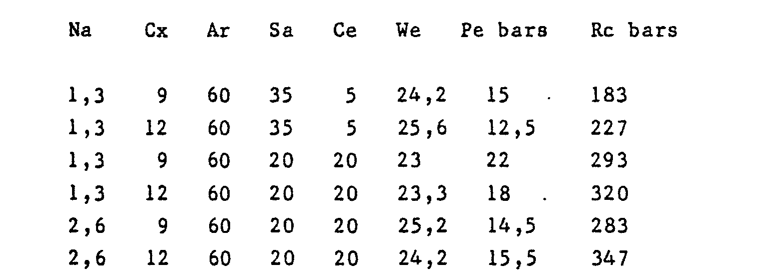

Pour chaque composition, les résistances au gel sont conformes à la norme NFP 13 301.

EXEMPLE 3: compare l'efficacité du ciment sans cure hydrothermale (conformément au brevet français 2 405 908), et celle de la chaux conformément à l'invention.

L'argile développe environ 80 mètres carrés par gramme. Les dilatations sont comptées en parties par million, ou micromètres par mètre.

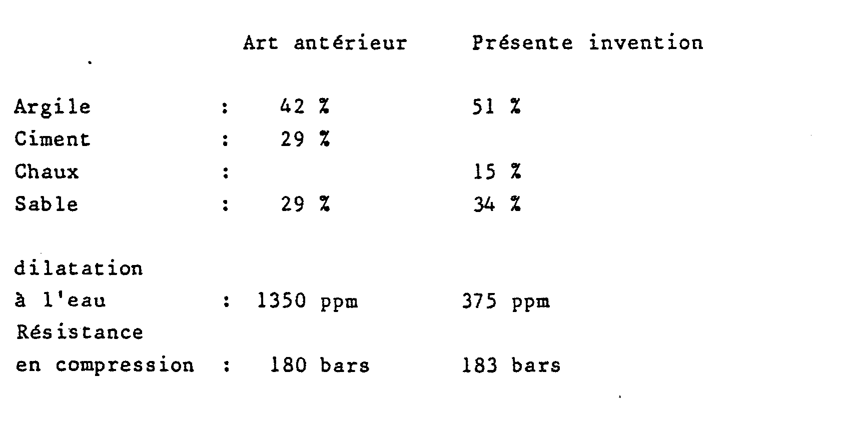

Le procédé selon l'invention peut servir à produire des éléments de construction pour le bâtiment et le génie civil, des pièces mécaniques, des pièces diverses, et des granulés. Il est possible de l'appliquer aussi à des éléments non manufacturés, mais façonnés sur place, tels que le lutage et l'enduit d'une chambre de traitement à la vapeur, une chambre elle-même ou un four tunnel destinés par exemple à la mise en oeuvre industrielle du procédé, voire à des zones de sols, de façon comparable à certains essais de cuisson céramique sur place de zones de sols et talus, ainsi qu'il a déjà été pratiqué dans quelques cas de génie civil. Le procédé est applicable à de nombreuses méthodes de mise en forme, et à leurs combinaisons, pour répondre à diverses exigences de formes et de cotes, sans sortir du cadre de l'invention.

Les variétés cristallines des phases néoformées selon l'invention peuvent varier selon les minéraux argileux, et même selon les charges, non seulement par leurs compositions chimiques, et leurs solubilités différentes, mais même par leurs réseaux cristallins différents, et par les relations d'épitaxie qui régissent la germination et la croissance des nouvelles phases sur les anciennes. Il est donc possible d'obtenir de nombreuses variantes minéralogiques sans sortir du cadre de l'invention.

Il est évident que les phases principale et finale du traitement thermique, qui ont été séparées ici pour la clarté de l'exposé, peuvent être continuement enchainées et combinées, par une évolution graduelle de la température et de la pression partielle de vapeur d'eau, selon les principes exposés ci-dessus, sans sortir du cadre de l'invention.

## Revendications

1. Procédé de fabrication de produits minéraux compacts, de grande résistance et de grande stabilité dimensionnelle à partir d'argile,
- selon lequel on mélange de l'argile, des charges minérales inertes, ou peu pouzzolaniques, de l'eau et un réactif calcique,
- selon lequel ce réactif calcique est de la chaux, ou est un des autres hydroxydes alcalino-terreux (hydroxydes de baryum ou de strontium), ou dégage de l'hydroxyde de calcium comme le fait l'hydratation du klinker de ciment portland, ou est un mélange des précédents,
- selon lequel on met en forme ce mélange par un des procédés aboutissant à des moulages fermes ou durs, tels que pressage à partir de poudre semi-sèche ou de pâte, extrusion de pâte, ou laminage, suivis si nécessaire d'un séchage partiel mené sensiblement jusqu'à la limite de retrait,
- selon lequel on fait subir ensuite au produit un traitement thermique en atmosphère humide,
- et selon lequel le mélange à mouler contient, outre le réactif principal calcique, de l'hydroxyde alcalin (qui peut être obtenu en tout ou en partie, par une des réactions de caustification connues par ailleurs), dans la proportion de 30 à 800 millimoles par kilogramme de mélange sec, soit pour l'hydroxyde de sodium, la proportion pondérale de 0.12 % à 3,2 X du mélange sec,
caractérisé en ce que :
a/ le traitement thermique est articulé en deux étapes, l'étape principale et l'étape finale, qui diffèrent par leurs températures et leurs humidités relatives ou degré de surchauffe, mais toutes deux à la pression atmosphérique,
b/ l'étape principale est conduite dans des conditions peu ou non séchantes pour la solution aqueuse alcaline intersticielle (qui sert de milieu de diffusion pour les espèces ioniques peu solubles silicates, aluminates et alcalino-terreux), à la température maximale permise par la pression atmosphérique dans une atmosphère de vapeur d'eau (105.7* C si la vapeur d'eau est exempte d'air),
c/ l'étape finale du traitement thermique est une dessi- cation du milieu aqueux intersticiel, obtenue par élévation de la température au dessus de 105^{*} C, dans une atmosphère progressivement séchante, pendant une durée qui dépend de la température finale admise, et qui est déterminée par la disparition des gels alcalins facilement gonflants, transformés en minéraux alcalins chimiquement et mécaniquement stables, la transition entre l'étape principale et l'étape finale étant définie comme l'instant où le réactif calcique est consommé dans une proportion au moins égale à 90%. par combinaison avec les silicates de l'argile.

2. Procédé selon la revendication 1, caractérisé en ce qu'au début de l'étape principale du traitement thermique, la concentration en cations de métaux alcalins est supérieure à 0,027 équivalents par litre d'eau.

3. Procédé selon l'une des revendications précédentes, caractérisé en ce que la somme des concentrations d'anions OH-, orthosilicate SiO₄H₃⁻ et aluminate AlO₄H₄- dans la solution intersticielle, est supérieure à 0.0345 équivalents par litre d'eau au début de l'étape principale du traitement thermique.

4. Procédé selon l'une quelconque des revendications précédentes, caractérisé en ce que l'étape finale du traitement thermique est effectuée à la pression atmosphérique à une température de l'ordre de 120^{*} C, sous une pression partielle de vapeur d'eau de l'ordre de 800 millibars ou inférieure, et dure de 2 à 12 heures.

5. Procédé selon l'une quelconque des revendications précédentes, caractérisé en ce que l'étape principale du traitement thermique est précédée d'une maturation à température modérée, typiquement entre 20^{*} C et 70" C, intervenant après le formage, et pouvant être simultanée au séchage partiel conduit jusqu'à la limite de retrait.

6. Procédé selon l'une quelconque des revendications précédentes, caractérisé en ce que la masse argileuse, naturellement ou par mélange avec une charge minérale, développe une surface spécifique mesurée par adsorption de bleu de méthylène, inférieure ou égale à 60 mètres carrés par gramme, et de préférence comprise entre 10 et 30 mètres carrés par gramme, mesurée sur le mélange d'argiles et de charges (réactif calcique exclu), et présente une granulométrie largement et régulièrement étalée.

7. Procédé selon l'une quelconque des revendications précédentes, caractérisé en ce que le réactif calcique contient ou produit au moins 0,027 milliéquivalents, de préférence 0,108 milliéquivalents, et au plus 0,405 milliéquivalents d'hydroxyde alcalino-terreux (au moins un milligramme, de préférence quatre milligrammes, et au plus quinze milligrammes d'hydroxyde de calcium, par exemple) par mètre carré de surface de la masse argileuse, mesurée au bleu de méthylène.

8. Procédé selon l'une quelconque des revendications précédentes, caractérisé en ce que la pression partielle de vapeur d'eau (Pw) dans l'étape finale du traitement thermique, pression au maximum égale à 1,013 bars, est reliée à la température selon la loi suivante :

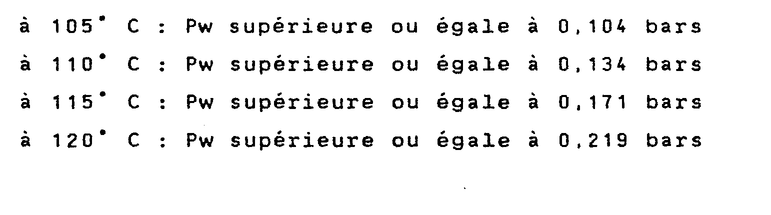

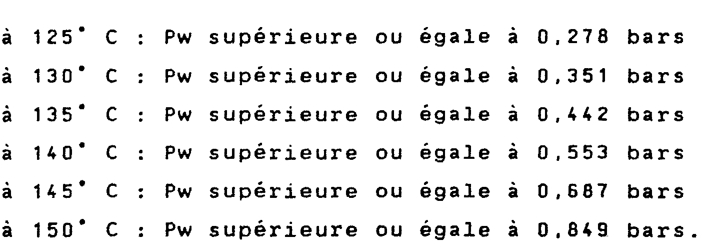

9. Produits et éléments de construction compacts, présentant une résistance à la compression supérieure à 180 bars, et des variations dimensionnelles inférieures à 1200 microns par mètre lors de cycles immersion-séchage, caractérisés en ce qu'ils sont fabriqués par un procédé selon l'une quelconque des revendications précédentes.
